**Europäisches Patentamt**

**European Patent Office**

**Office européen des brevets**

(19)

(11) Veröffentlichungsnummer: **0 255 024 B1**

(12) # EUROPÄISCHE PATENTSCHRIFT

(45) Veröffentlichungstag der Patentschrift: **27.11.91**    (51) Int. Cl.⁵: **A01F 25/20**

(21) Anmeldenummer: **87110552.4**

(22) Anmeldetag: **21.07.87**

---

(54) **Silagegutschneider mit einem L- oder U-förmigen Tragrahmen.**

---

(30) Priorität: **23.07.86 DE 3624828**

(43) Veröffentlichungstag der Anmeldung:
**03.02.88 Patentblatt 88/05**

(45) Bekanntmachung des Hinweises auf die
Patenterteilung:
**27.11.91 Patentblatt 91/48**

(84) Benannte Vertragsstaaten:
**AT BE DE FR LU NL**

(56) Entgegenhaltungen:
**DE-A- 3 111 868**
**DE-A- 3 312 916**
**DE-A- 3 416 265**
**FR-A- 2 148 060**

(73) Patentinhaber: **Firma Bernard van Lengerich
Maschinenfabrik GmbH & Co.**

**W-4448 Emsbüren(DE)**

(72) Erfinder: **Van Lengerich, Willi
Jos. Tiesmeyer Strasse 14
W-4448 Emsbüren(DE)**

(74) Vertreter: **Busse & Busse Patentanwälte
Postfach 1226 Grosshandelsring 6
W-4500 Osnabrück(DE)**

---

Rank Xerox (UK) Business Services

## Beschreibung

Die Erfindung bezieht sich auf einen Silagegutschneider mit einem höhenbeweglich an einem Gestell abstützbaren, U- oder L-förmigen Tragrahmen, an dessen Tragrahmenschenkeln insbesondere als starre Schneidmesser ausgebildete, oszillierend von einem Antriebsorgan bewegbare Schneidwerkzeuge gehalten sind.

Silagegutschneider werden zum Schneiden von blockförmigen Silagegut, insbesondere aus einem Flachsilo, eingesetzt. Zum Schneiden von Silage, insbesondere von Grassilage, ist eine relativ hohe Schneidkraft notwendig, die von einem oder mehreren Antriebsorganen der Messerleisten aufgebracht werden muß. Da jedoch der Silagegutschneider zumeist als Anbaugerät für einen Ackerschlepper oder dgl. eingesetzt wird, der nur ein bestimmtes zulässiges Gesamtgewicht hat, soll der Silagegutschneider möglichst leichtgewichtig ausgebildet sein, so daß über sein Eigengewicht hinaus eine möglichst große Nutzlast in Form von geschnittenem Silagegut aufgenommen werden kann. Die Antriebsorgane der Messerleisten können daher trotz der von ihnen aufzubringenden Schneidkraft nicht allzu schwergewichtig ausgebildet sein.

Aus der FR-A 2,148,060 ist ein Silagegutschneider mit einem U-förmigen Tragrahmen bekannt, an dessen unteren Endkanten als starre Messer ausgebildete Schneidwerkzeuge angeordnet sind. Diese sind über eine den Schneidraum übergreifende Antriebswelle anzutreiben, welche im Bereich der vorderen Schneidleisten mit zwei exzentrisch gelagerten Antriebsscheiben versehen ist. An diese beiden exzentrisch gelagerten Antriebsscheiben greifen jeweils Arme an, die ihrerseits endseitig mit einem Antriebshebel gelenkig verbunden sind. Diese Antriebshebel sind anderenends gelenkig mit der vorderen Schneidleiste verbunden und mittig am Tragrahmenholm angelenkt. Sobald die Antriebswelle in Rotation versetzt wird, ist über die Exzenterscheibe der jeweilige Antriebshebel in eine hin- und hergehende Schwenkbewegung zu versetzen, wobei die Antriebsbewegungskraft auf die Schneidleisten zu übertragen ist.

Nachteilig bei dieser Ausführungsform ist, daß eine solche Antriebsübertragungseinrichtung den in der Praxis auftretenden Verhältnissen insbesondere hinsichtlich der aufzubringenden Schneidleistungen nicht gerecht werden kann. Dies insbesondere deshalb, da das sichere Beherrschen der aufzubringenden Kräfte eine Auslegung von Antriebswelle, Exzenterscheiben mit daran befestigten Antriebshebeln und dgl. insbesondere hinsichtlich Torsionsfestigkeit, Bruchgrenze und damit letztendlich der Stärke der Teile erforderlich machen würde, die sich außerordentlich nachteilig auf das Gesamtgewicht der Vorrichtung auswirken würde. Ein weiterer wesentlicher Nachteil dieses bekannten Gerätes ist die Notwendigkeit der den Schneidraum oben übergreifenden Antriebswelle und der hiermit verbundenen Antriebsteile. Damit ist das Silagegut frei den erhebliche Verschmutzungen verursachenden bewegten Teilen ausgesetzt. Darüber hinaus können Silagegutverteileinrichtungen nicht von oben eingreifen. Seitliche Schneidwerkzeuge sollen bei dem Gerät nach der FR-A über Schubstangen und Hebel und dgl., offensichtlich gelenkig teilweise miteinander verbundene Teile angetrieben werden können. Im rauhen Alltagsbetrieb ist eine sichere Antriebskraft damit nur schwerlich aufzubringen. Die dazu erforderlichen Auslenkbewegungen beeinflussen die Anbaumöglichkeit an Tragteilen des Silagegutschneiders erheblich, so daß insgesamt die Gestalt und Auslegung der Antriebselemente der Seitenmesser als in der Praxis nur beschränkt funktionstauglich anzusehen ist.

Aus der DE-A 34 16 265 ist ein Silagegutschneider bekannt, bei dem das Doppelmesser aufweisende Schneidwerk einen Antrieb mit Exzentern sowie damit verbundenen Pleueln und gelenkig mit diesen verbunden Schwinghebeln hat. Die zweiarmigen Schwinghebel sind dabei abgekröpft ausgebildet und an einem Rahmenteil gelagert, wobei der dem Pleuel zugewandte Arm eine geringere Länge als der dem Schneidwerkzeug zugeordnete Arm hat mit der Konsequenz, daß die vom Antrieb aufzubringenden Kräfte erheblich sind.

Aus der DE-A 33 12 916 ist ein Gerät zur Entnahme von Futterportionen aus Silos bekannt, bei der die am Tragrahmen gehaltenen Schneidwerkzeuge über Schwinghebel in hin- und hergehende Schneidbewegungen zu versetzen sind. Die Schwinghebel sind mittig an Tragrahmenteilen gelagert, so daß auch hier die aufzubringenden Kräfte erheblich sind. Dies geht zu Lasten entweder der Standfestigkeit der Antriebsübertragungsteile oder zu Lasten des Gewichts der Gesamtanordnung infolge einer entsprechend starken Auslegung der Teile. Es ist Aufgabe der vorliegenden Erfindung, einen Silagegutschneider zu schaffen, der hinsichtlich des aufzubringenden Kraftaufwandes für den Schneidwerkzeugantrieb verbessert ist. Zur Lösung dieser Aufgabe zeichnet sich der Silagegutschneider durch die im Anspruch 1 aufgeführten Merkmale aus. Durch die verstärkt ausgebildete Übertragung der Kraft der Antriebsorgane kann die zur Aufbringung der erforderlichen Schneidkraft der Schneidwerkzeuge erforderlichen Antriebsorgane wesentlich kleiner und gewichtsmäßig leichter dimensioniert werden. Die Gewichtsreduzierung resultiert einerseits aus dem Einsatz vorzugsweise eines Antriebsorgans und andererseits daraus, daß die Antriebskörper direkt miteinander kraftschlüssig gekoppelt werden können.

Nach einer Weiterbildung der Erfindung ist im Übergangsbereich einander benachbarter Schenkel ein Verbindungselement auf- und abbewegbar geführt und ist das Verbindungselement über eine lotrechte Bewegung des Verbindungselementes in horizontale Messerleistenbewegungen umsetzende Umsetzungsorgane mit den Messerleisten der Schenkel gekoppelt. Durch die Umsetzung der lotrechten Bewegung des Verbindungselementes in horizontale Messerleistenbewegungen wird in vorteilhafter Weise ein Verschleiß des Verbindungselementes vermindert bzw. verhindert. Als Umsetzungsorgan ist bei einer bevorzugten Ausbildung des Silagegutschneiders ein Winkelhebel vorgesehen, der auf einer quer zur Messerleiste verlaufenden Drehachse gelagert ist, ist ein erster etwa parallel zur Messerleiste verlaufender Arm des Winkelhebels an dem Verbindungselement angelenkt und ist ein zweiter etwa senkrecht zur Messerleiste verlaufender Arm an der Messerleiste angelenkt. Mittels des Winkelhebels ist eine besonders einfache Umsetzung einer horizontalen Bewegung in eine lotrechte Bewegung möglich. Zudem ist mit Hilfe des Winkelhebels eine kostengünstige Ausbildung des Silagegutschneiders möglich, der außerdem robust und wartungsfreundlich auszubilden ist. Eine Vereinfachung des zum Antrieb einer Messerleiste notwendigen Hebelgetriebes ist nach einer Weiterbildung der Erfindung dadurch erreicht, daß der Antriebshebel und der Winkelhebel derselbe Hebel ist oder derart zu einem Dreiarmhebel zusammengefaßt sind, daß der zweite Arm des Antriebshebels und der zweite Arm des Winkelhebels derselbe Arm des Dreiarmhebels ist.

Bei einer bevorzugten Ausbildung des Silagegutschneiders erstreckt sich der erste Arm des Antriebshebels parallel zur zugeordneten Messerleiste und ist einer etwa lotrechten Einwirkung des zugeordneten Antriebsorgans ausgesetzt. Ein lotrecht auf den Antriebshebel einwirkendes Antriebsorgans ist vorteilhaft am Tragrahmen anzuordnen, wobei in einfacher Weise jedem Schenkel ein eigenes Antriebsorgan zugeordnet werden kann. Bei Kopplung der Antriebshebel mehrerer Schenkel über Verbindungselemente wirkt das Antriebsorgan mit Vorteil parallel zur Bewegungsrichtung des Verbindungselementes auf den Antriebshebel ein, so daß mit den zweiten Armen der Antriebshebel diese Einwirkung nur noch auf die einzelnen Messerleisten übertragen werden muß und dabei in vorteilhafter Weise in eine Bewegung der Messerleisten umgesetzt wird.

Nach einer Weiterbildung der Erfindung sind wenigstens an einem Schenkel zwei parallel zueinander verlaufende Messerleisten angeordnet, wobei die Messerleisten eines Schenkels vorzugsweise mittels zweier Antriebshebel zueinander gegenläufig antreibbar sind. Durch zwei zueinander gegenläufig antreibbare Messerleisten wird die Schneidwirkung gegenüber einer einfachen Messerleiste erhöht, insbesondere wenn die Messerleisten gezahnte Schneiden aufweisen, die sich scherenartig zueinander bewegen. Zudem wird durch die gegenläufige Bewegung der Messerleisten der Tragrahmen, der diese Bewegungen auffangen muß, weniger beansprucht. Insbesondere kann es nicht zu Resonanzschwingungen des Tragrahmens kommen, die den Tragrahmen in seinen Anlenkpunkten am Gestell belasten würden. Um derartige Belastungen zu vermeiden, ist bei der Kopplung an unterschiedlichen Schenkeln angeordneter Antriebshebel auch bei Betrieb einfacher Messerleisten vorgesehen, daß die Messerleisten der einander benachbarten Schenkel gegenläufig zueinander angetrieben werden.

Die Antriebshebel der Messerleisten eines Schenkels sind bei einer bevorzugten Ausbildung, vorzugsweise mittels eines Verbindungsgelenkes, miteinander verbunden, so daß sie mit Hilfe eines einzigen Antriebsorgans angetrieben werden können, welches vorzugsweise am Verbindungsgelenk angreift.

Bei einer bevorzugten Ausbildung des erfindungsgemäßen Silagegutschneiders ist der Tragrahmen U-förmig ausgebildet, und weisen sämtliche Messerleisten ein gemeinsames Antriebsorgan auf, welches an dem Verbindungsgelenk der Antriebshebel der Messerleisten des die Basis des U-förmigen Tragrahmens bildenden mittleren Schenkels angreift. Die Kraft kann über die Antriebshebel symmetrisch auch an die Messerleisten der Seitenschenkel weitergeleitet werden. Der mittlere Schenkel eines U-förmigen Tragrahmens ist in der Regel der längste Schenkel des Tragrahmens, so daß sich die ersten Arme der Antriebshebel, an denen das Antriebsorgan angreift, vorzugsweise über die halbe Länge dieses Schenkels erstreckend, möglichst lang ausgebildet werden können und dadurch eine möglichst große Kraftverstärkung des Antriebsorgans erreichbar ist.

Bei Silagegutschneidern der eingangs genannten Gattung ist es üblich, zum Antrieb der Messerleisten, die in der Regel mit Zugmitteln miteinander gekoppelt sind, einfach wirkende Arbeitszylinder zu verwenden, die die Messerleisten hin- und herziehn und miteinander gekoppelt sind, wozu die verwendeten Arbeitszylinder jeweils drei Druckmittelleitungen aufweisen müssen. Aufgrund der zur Kopplung zwischen Messerleisten und Antriebsorgan vorgesehenen Antriebshebel bei der erfindungsgemäßen Vorrichtung ist es mit Vorteil möglich, bei einer bevorzugten Ausbildung des Silagegutschneiders zum Antrieb der Messerleisten ein oder mehrere doppelt-wirkende Arbeitszylinder einzusetzen. Diese Arbeitszylinder arbeiten betriebssicher und sind kostengünstig und wartungsfreundlich. Zudem benötigen die doppelt-wirkenden Arbeitszylinder nur zwei Druckmittelleitungen, egal ob ein einzelner Arbeitszylinder zum Antrieb der Messerleisten vorgesehen ist, oder ob mehrere Arbeitszylinder für die Messerleisten unterschiedlicher Schenkel vorgesehen sind, die vorzugsweise synchron arbeitend miteinander gekoppelt sind.

Vorzugsweise ist der Arbeitszylinder an dem Schenkel der von ihm angetriebenen Messerleiste selbst abgestützt, so daß lediglich die Druckmittelleitungen zu dem Arbeitszylinder hinführen, die in einfacher Weise so verlegt sein können, daß sie den Schneidvorgang des Tragrahmens nicht behindern. Der Arbeitszylinder ist vorzugsweise in der Schenkelebene etwa lotrecht vom Schenkel aufragend angeordnet, so daß er das Eindringen der vorzugsweise etwa plattenförmig ausgebildeten Schenkel möglichst nicht behindert. Das Eindringen des Tragrahmens in die zu schneidende Silage wird nach einer Weiterbildung der Erfindung dadurch weiter verbessert, daß jeder Schenkel ein Gehäuse zur Aufnahme der von ihm getragenen, beweglichen Bauelemente aufweist, aus dem unterseitig nur die Schneide der an ihm geführten Messerleiste herausragt, wobei der Zylindermantel eines an diesem Schenkel eventuell abgestützten Arbeitszylinders vorzugsweise stromlinienförmig nach unten in das Gehäuse des den Arbeitszylinder tragenden Schenkels übergeht. Durch das Gehäuse wird zudem eine Verschmutzung der beweglichen Bauelemente des Tragrahmens verhindert, die die Beweglichkeit dieser Bauelemente beeinträchtigen könnte.

Insbesondere um eine besonders flache plattenförmige Ausbildung der Schenkel des Tragrahmens zu ermöglichen, zeichnet sich der erfindungsgemäße Silagegutschneider bei einer bevorzugten Ausbildung aus durch eine flache Ausbildung verwendeter Hebel und durch zur Funktion der Hebel notwendige Gelenke, die als Gelenkpfannen ausgebildete, etwa kreisbogenförmig verlaufende Führungsbahnen und entsprechende, in die Gelenkpfannen eingreifende Gelenkköpfe aufweisen. Die flach ausgebildeten Hebel sind durch die Ausbildung der Gelenke mit Vorteil in ein und derselben Ebene anordbar, weil Gelenkbolzen oder ähnliches, die eine Anordnung der Hebel in mehreren Ebenen nötig machen würden und zu einer dickeren Ausbildung der Schenkel führen würden, in vorteilhafter Weise vermieden werden.

Ausführungsbeispiele, aus denen sich weitere erfinderische Merkmale ergeben, sind in der Zeichnung dargestellt. Es zeigen:

Fig. 1 eine perspektivische Ansicht eines U-förmigen Tragrahmens,

Fig. 2 die Vorderansicht des die Basis des U-förmigen Tragrahmens bildenden mittleren Schenkels gemäß Fig. 1,

Fig. 3 eine Seitenansicht eines seitlichen Schenkels des Tragrahmens gemäß Fig. 1,

Fig. 4 den in Fig. 1 mit IV bezeichneten, durch eine strichpunktierte Linie begrenzten Eckenausschnitt des Tragrahmens in vergrößerndem Maßstab, und

Fig. 5 einen Schnitt durch den mittleren Schenkel des Tragrahmens gemäß Fig. 2 entlang der in Fig. 2 mit V - V bezeichneten strichpunktierten Linie.

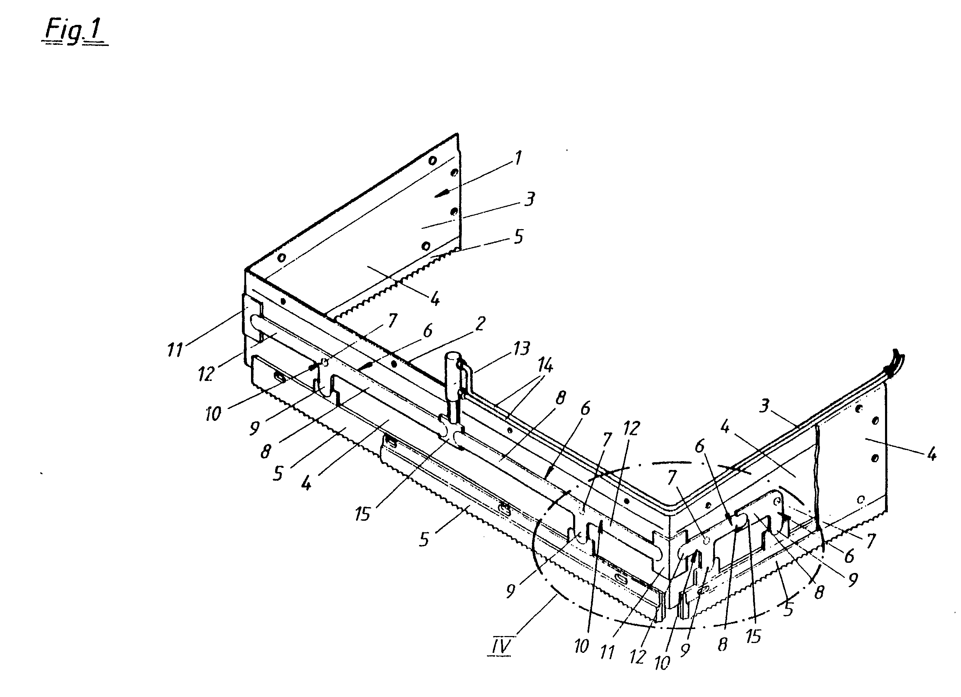

In Fig. 1 ist in perspektivischer Ansicht ein U-förmiger Tragrahmen 1 mit einem mittleren Schenkel 2 und zwei seitlichen Schenkeln 3 dargestellt. Die Schenkel 2, 3 sind etwa plattenförmig und weitgehend als flache Gehäuse mit Verkleidungen 4 ausgebildet, aus denen unterseitig Messerleisten 5 vorragen, die in horizontaler Richtung oszillierend hin- und herbewegbar an den Schenkeln 2, 3 geführt sind. An jedem Schenkel 2, 3 sind zwei zueinander parallel ausgerichtete Messerleisten 5 angeordnet, die zueinander gegenläufig bewegbar sind.

Für jede Messerleiste 5 ist an dem ihr zugeordneten Schenkel 2, 3 ein mehrarmiger Antriebshebel 6 angeordnet, der auf einer quer zur Messerleiste 5 verlaufenden Drehachse 7 gelagert ist. Dieser Antriebshebel 6 weist einen etwa parallel zur Messerleiste 5 ausgerichteten ersten Arm 8 auf, der mit einem als Antriebsorgan vorgesehenen, doppelt-wirkenden Arbeitszylinder 13 kraftschlüssig gekoppelt ist. Jeweils ein zweiter Arm 9 des Antriebshebels 6 ist gelenkig mit der von ihm angetriebenen Messerleiste 5 verbunden, zu der dieser zweite Arm 9 etwa quer verläuft. Die jeweils ersten Arme der Antriebshebel 6 eines Schenkels 2, 3 sind mittels eines Verbindungsgelenkes 15 miteinander verbunden. Die Antriebshebel 9 von Messerleisten 5 einander benachbarter Schenkel 2, 3 des Tragrahmens 1 sind über Winkelhebel 10, die auf den Drehachsen 7 schwenkbar gelagert sind und über die Winkelhebel 10 im Übergangsbereich der Schenkel 2, 3 verbindende Verbindungselemente 11, die aufund abbewegbar angeordnet sind, kraftschlüssig miteinander gekoppelt. Jeder Winkelhebel 10 weist einen ersten Arm 12 auf, der etwa parallel zur zugeordneten Messerleiste 5 verläuft und an einem Verbindungselement 11 angelenkt ist. Ein zweiter Arm des Winkelhebels 10 verläuft etwa quer zur zugeordneten Messerleiste 5 und ist mit dieser Messerleiste 5 gelenkig verbunden. In dem in Fig. 1 dargestellten Ausführungsbeispiel sind jeweils ein Antriebshebel 6 und ein Winkelhebel 10 derart zu einem Dreiarmhebel zusammengefaßt, daß der zweite Arm 9 des Antriebshebels 6 und der zweite Arm des Winkelhebels 10 denselben Arm des Dreiarmhebels bilden. Der erste Arm 8 des Antriebshebels 6 und der erste Arm 12 des Winkelhebels 10 bilden zusammen einen parallel zur Messerleiste 5 verlaufenden Hauptarm des Dreiarmhebels.

Sämtliche Messerleisten des in Fig. 1 dargestellten Ausführungsbeispieles werden mit Hilfe des einzigen Arbeitszylinders 13 angetrieben, der etwa in der Mitte des mittleren Schenkels 2 angeordnet ist, in der Ebene des Schenkels 2 vom Schenkel 2 aufragt und an dem Verbindungsgelenk 15 der ersten Arme 8 der Antriebshebel 6 des Schenkels 2 angreift. Der doppelt-wirkende Arbeitszylinder 13 benötigt lediglich zwei Druckmittelleitungen 14, die derart am oberen Rand der Schenkel 2, 3 verlegt sind, daß sie ein Eindringen des Tragrahmens 1 in Silagegut beim Schneiden nicht behindern. Bevorzugtermaßen sind zur Umschaltung des doppeltwirkenden Arbeitszylinders besondere Steuerleitungen vorgesehen, die einenends an entsprechende Steueranschlüsse des Arbeitszylinders angeschlossen und anderenends mit einem hydraulischen Umschaltventil verbunden sind. Beim Überfahren des jeweiligen Steueranschlusses durch den Arbeitskolben wird dabei ein den Umschaltvorgang des Umschaltventils veranlassender Druckimpuls übermittelt, so daß bei Anliegen des jeweiligen Arbeitssystemdruckes nach dieser vorteilhaften Ausgestaltung die für die hin- und hergehenden Messerbewegungen erforderlichen Umschaltvorgänge zu bewerkstelligen sind.

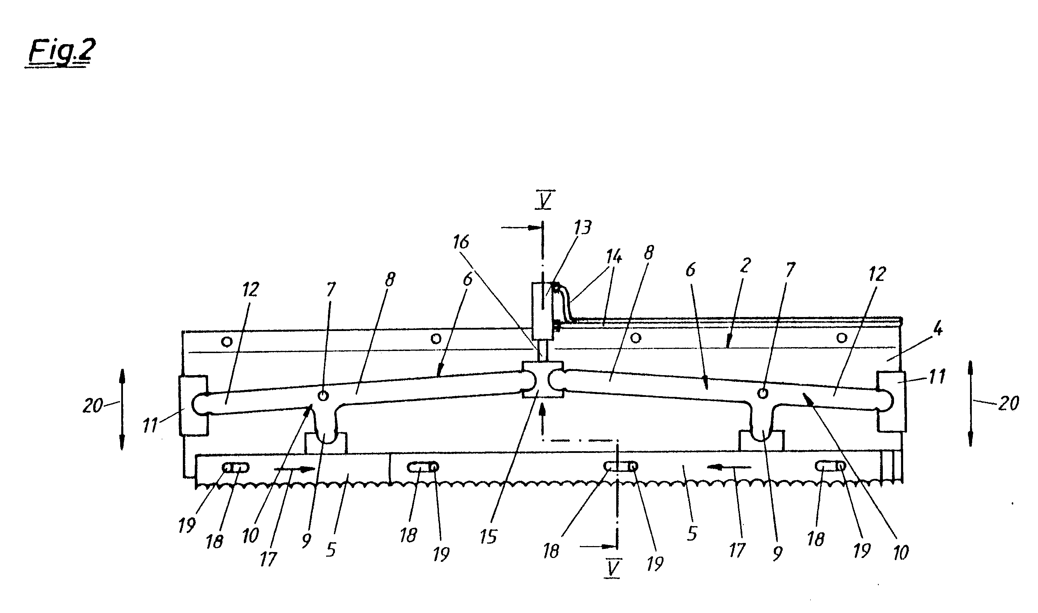

In Fig. 2 ist die Vorderansicht des mittleren Schenkels 2 des Tragrahmens 1 gemäß Fig. 1 dargestellt. Gleiche Bauelemente sind mit den gleichen Bezugszahlen bezeichnet, wie in Fig. 1.

In der Fig. 2 ist die Kolbenstange 16 des Arbeitszylinders 13 in eingefahrener Stellung dargestellt, in der die beiden gegenläufig zueinander angetriebenen Messerleisten 5 des Schenkels 2 so weit in Richtung der Pfeile 17 verschoben sind, wie es die zur Führung der Messerleisten 5 vorgesehenen Langlöcher 18 in den Messerleisten, die von Bolzen 19 durchgriffen sind, erlauben.

Bei ausgefahrener Kolbenstange 16 sind die Messerleisten 5 in zu den Pfeilen 17 umgekehrter Richtung bis zum Anschlag verschoben. Durch Ein- und Ausfahren der Kolbenstange 16 werden die Verbindungselemente 11 in Richtung der Doppelpfeile 20 auf- und abbewegt.

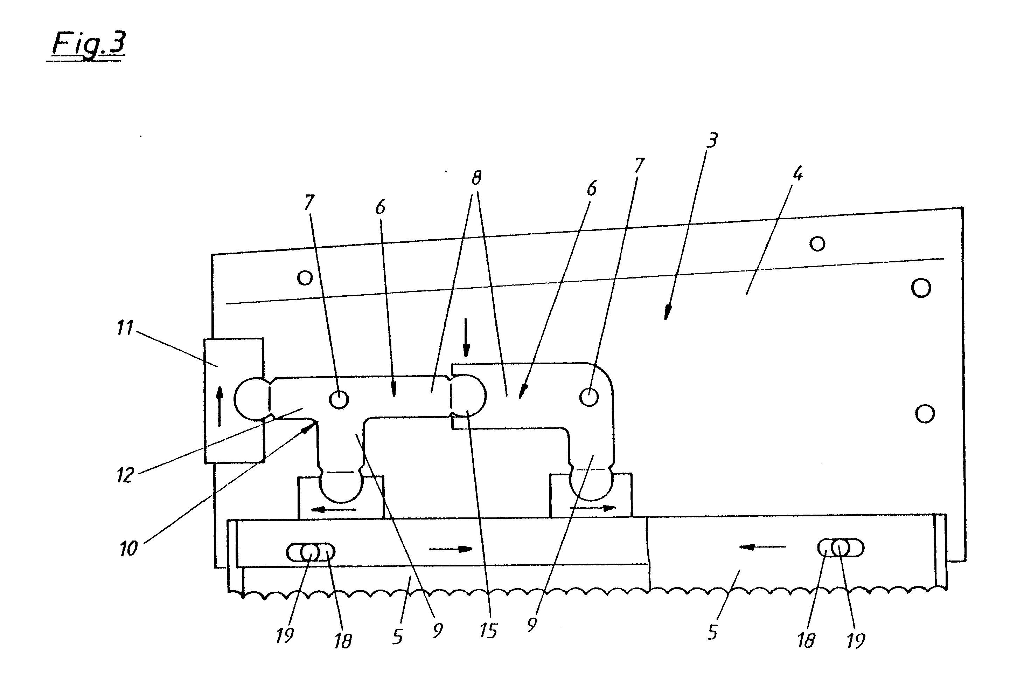

Fig. 3 zeigt eine Seitenansicht eines seitlichen Schenkels 3 des Tragrahmens 1 gemäß Fig. 1. Gleiche Bauelemente sind mit den gleichen Bezugszahlen bezeichnet, wie in den vorhergehenden Figuren.

Die in der Fig. 3 eingezeichneten Pfeile geben die Bewegungsrichtungen der mit den Pfeilen versehenen Bauelemente bei Ausfahren der Kolbenstange 16 des Arbeitszylinders 13 an.

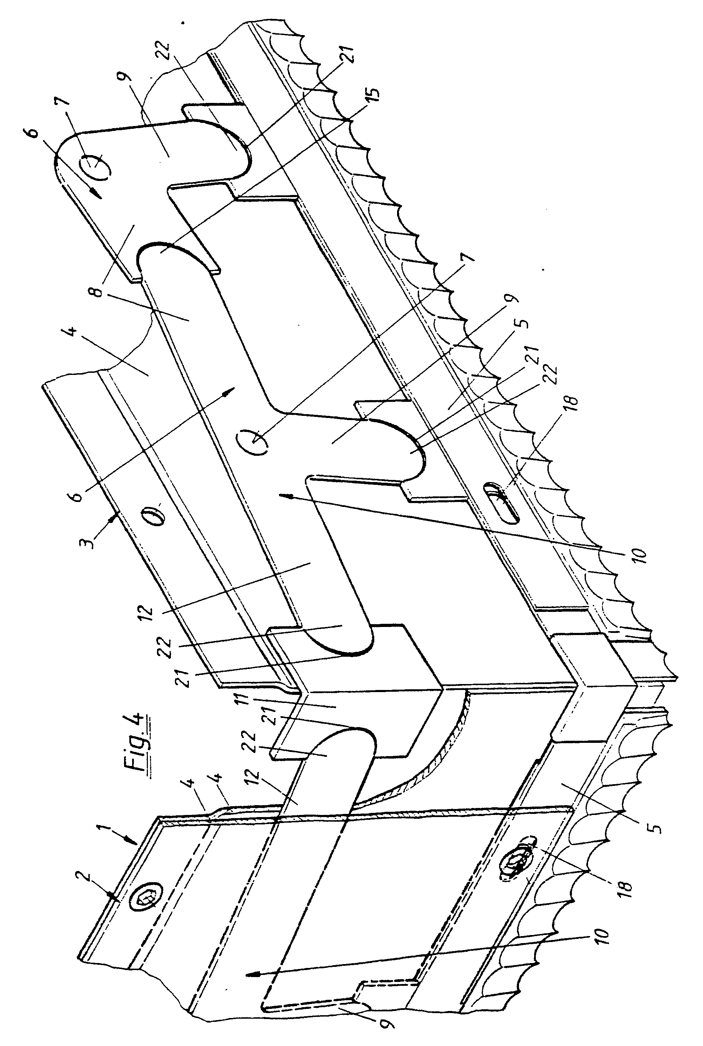

In Fig. 4 ist der in Fig. 1 mit IV bezeichnete, von einer strichpunktierten Linie begrenzte Ausschnitt in vergrößerndem Maßstab dargestellt. Gleiche Bauelemente sind mit den gleichen Bezugszahlen bezeichnet wie in den vorhergehenden Figuren.

In Fig. 4 ist insbesondere die Anordnung des Verbindungselementes 11 zu erkennen. Außerdem ist die flache Ausbildung der für die erfindungsgemäße Vorrichtung verwendeten Hebel 6,10 zu erkennen, sowie die zur Funktion der Hebel 6,10 notwendigen Gelenke, die als Gelenkpfannen 21 ausgebildete, etwa kreisbogenförmig verlaufende Führungsbahnen und entsprechende, in die Gelenkpfannen 21 eingreifende Gelenkköpfe 22 aufweisen.

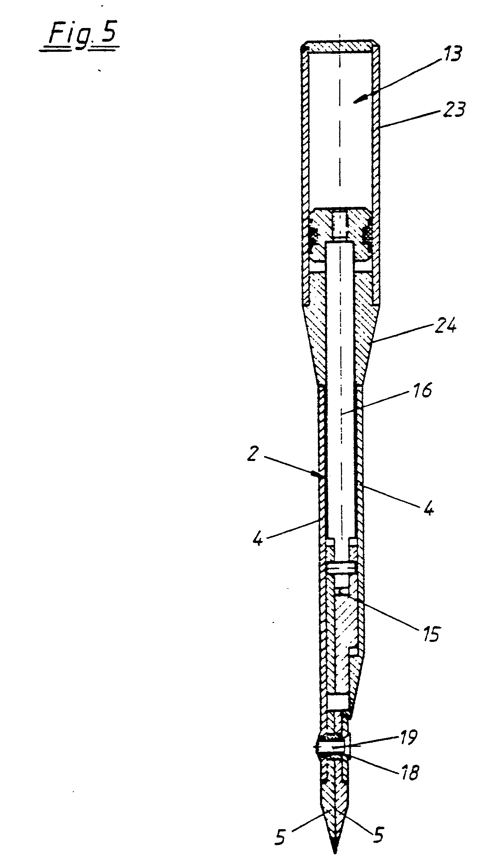

Fig. 5 zeigt einen Schnitt durch den mittleren Schenkel 2 entlang der in Fig. 2 mit V - V bezeichneten strichpunktierten Linie. Gleiche Bauelemente sind mit den gleichen Bezugszahlen bezeichnet wie in den vorhergehenden Figuren.

Aus Fig. 5 ist insbesondere zu erkennen, daß der Zylindermantel 23 des Arbeitszylinders 13 nach unten über eine konische Flanke 24 stromlinienförmig in das Gehäuse des Schenkels 2 übergeht.

Durch eine entsprechende größenmäßige Abstimmung der einzelnen Arme der Antriebshebel läßt sich in dem jeweils gewünschten Maße die Antriebskraft des gemeinsamen Antriebsorgans 13 übersetzt und damit verstärkt auf die Schneidwerkzeuge übertragen. Neben einer Ausbildung des Antriebsorgans als Antriebshebel sind auch sonstwie gestaltete geeignete Antriebsorgane vorzusehen, beispielsweise in Gestalt von Zahnrädern. Ohne das Erfordernis eines besonderen steuerungstechnischen Aufwandes lassen sich auch Bei einem insgesamt mit Doppelschneidmessern versehenem Silagegutschneider sämtliche Schneidleisten von dem gemeinsamen Antriebsorgan antreiben, so daß das Gewicht durch die Doppelschneidmesserausbildung in negativer Weise nicht beeinflußt ist, dennoch jedoch die auch für ein schwer schneidbares Silagegut angestrebte hohe Schnittkraft der einzelnen Schneidleisten zu Verfügung steht. Translatorisch um die Eckbereiche des Tragrahmens zu bewegende Verbindungselemente zur Antriebskopplung von Schneidwerkzeugen, die infolge der während des Gerätebetriebes fortlaufenden unterschiedlichen Verbiegungen einem erhöhten Verschleiß unterliegen, sind bei dem Gerät nach der Erfindung in vorteilhafter Weise nicht notwendig.

**Patentansprüche**

1.  Silagegutschneider mit einem höhenbeweglich an einem Gestell abstützbaren, U- oder L-förmigen Tragrahmen (1), an dessen Tragrahmenschenkeln (2, 3) insbesondere als starre Schneidmesser ausgebildete, oszillierend von einem Antriebsorgan (13) bewegbare Schneidwerkzeuge (5) gehaltert sind, wobei zur Übertragung der Antriebsbewegung eines Antriebsorganes (13) eines seitlichen und/oder vorderen Schneidwerkzeuges (5) ein um eine im wesentlichen quer zur Schneidbewegungsrichtung des Schneidwerkzeuges (5) ausgerichtete Achse schwenkbeweglich am Tragrahmenschenkel (2, 3) abstützbarer Antriebskörper in Gestalt eines zumindest zweiarmigen Antriebs- oder Winkelhebels (6, 10) vorgesehen ist, dessen einer Arm (8, 12) mit dem den Hebel (6, 10) in eine Bewegung um seine Achse versetzenden Antriebsorgan (13) koppelbar und dessen zweiter, zum Schneidwerkzeug (5) ausgerichteter Arm (9) gelenkig mit diesem verbindbar ist, wobei der Antriebs- oder Winkelhebel (6, 10) ein als die Antriebsbewegungskraft des Antriebsorgans (13) verstärkt übertragendes Getriebeteil ausgebildet ist und der gelenkig mit dem Schneidwerkzeug (5) verbindbare Arm (9) des Antriebs- oder Winkelhebels (6, 10) eine geringere Länge als der dem Antriebsorgan (13) zugeordnete Arm (8, 12) hat.

2. Silagegutschneider nach Anspruch 1, **dadurch gekennzeichnet,** daß Schneidwerkzeuge (5) unterschiedlicher Tragrahmenschenkel (2, 3) ein gemeinsames Antriebsorgan haben, mit welchem sie über die Antriebskörper (6) antriebsmäßig koppelbar sind, wobei die Antriebskörper (6) von Schneidwerkzeugen (5) einander benachbarter Tragrahmenschenkel (2, 3) im Übergangsbereich der Schenkel (2, 3) kraftschlüssig verbindbar sind.

3. Silagegutschneider nach Anspruch 1 oder 2, **dadurch gekennzeichnet,** daß in dem seitlichen und dem vorderen Schneidwerkzeug (5) sowie in mit einem Antriebshebel (6) verbindbaren Teilen (11, 15) in etwa halbkugelige Gelenkpfannen ausgebildet sind, in die entsprechende halbkugelige Armenden der Antriebshebel (6) eingreifen.

4. Silagegutschneider nach einen der Ansprüche 1 bis 3, **dadurch gekennzeichnet,** daß der Antriebskörper (6) einer in etwa vertikalen Einwirkung des zugeordneten Antriebsorgans ausgesetzt ist.

5. Silagegutschneider nach einen der Ansprüche 1 bis 4, **dadurch gekennzeichnet,** daß zumindest dem vorderen Schneidwerkzeug (5) ein dreiarmiger Antriebshebel zugeordnet ist.

6. Silagegutschneider nach einem der Ansprüche 1 bis 5 mit als Doppelschneidmesser mit relativ zueinander beweglichen Schneidleisten ausgebildeten Schneidwerkzeugen (5), **dadurch gekennzeichnet,** daß die beiden Schneidleisten eines Schneidwerkzeuges (5) kraftschlüssig miteinander koppelbare, gegenläufig verschwenkbare Antriebskörper (6) haben.

7. Silagegutschneider nach Anspruch 6, **dadurch gekennzeichnet,** daß die erste Schneidleiste eines seitlichen Schneidwerkzeuges (5) eines dreiarmigen, dem Antriebsorgan (13) zugeordneten Antriebshebel und die zweite Schneidleiste des seitlichen Schneidwerkzeuges (5) einen gelenkig mit den dreiarmigen Antriebshebel verbindbaren, zweiarmigen Antriebshebel hat.

8. Silagegutschneider nach Anspruch 6 oder 7 mit einem U-förmigen Tragrahmen, **dadurch gekennzeichnet,** daß die beiden Schneidleisten des vorderen Schneidwerkzeuges (5) jeweils einen über ein Verbindungsteil (15) mit dem Antriebsorgan (13) koppelbaren Antriebskörper haben, wobei der eine Antriebskörper mit dem Antriebskörper der einen Schneidleiste eines seitlichen Tragrahmenschenkels und der andere Antriebskörper mit den Antriebskörper einer Schneidleiste des gegenüberliegenden seitlichen Tragrahmenschenkels verbindbar ist.

9. Silagegutschneider nach einem der Ansprüche 1 bis 8, **dadurch gekennzeichnet,** daß sämtliche Schneidleisten (5) von einem gemeinsamen Antriebsorgan (13) antreibbar sind, daß an einen Verbindungsgelenk (15) der Antriebskörper (6) der Schneidleisten (5) des vorderen Tragrahmenschenkels (2) angreift.

10. Silagegutschneider nach einem der vorhergehenden Ansprüche, **dadurch gekennzeichnet,** daß als Antriebsorgan ein doppelt wirkender Arbeitszylinder (13) vorgesehen ist.

11. Silagegutschneider nach Anspruch 10, **dadurch gekennzeichnet,** daß der Arbeitszylinder (13) an einem Tragrahmenschenkel (2) abgestützt ist und in der Schenkelebene etwa lotrecht vom Schenkel (2) aufragt.

12. Silagegutschneider nach einem der vorhergehenden Ansprüche, **dadurch gekennzeichnet,** daß jeder Tragrahmenschenkel (2, 3) als im wesentlichen plattenförmiges Gehäuse mit einem inneren Raum zur gekapselten Aufnahme der von ihm getragenen, beweglichen Teile ausgebildet ist, aus dem unterseitig die Messerleistenschneide herausragen.

## Claims

1. A silage block cutter with, adapted for vertical movement on a chassis, a U- or L-shaped supporting frame on the supporting frame members (2, 3) of which and constructed in particular as rigid cutters, cutting tools (5) are supported and are adapted for oscillating movement produced by a driving means (13), whereby to transmit the driving movement of a driving member (13) of a lateral and/or front cutting tool (5), a driving member (6, 8, 9) which can be supported on the supporting frame member (2, 3) for pivoting movement about an axis orientated substantially transversely to the direction of cutting movement of the cutting tool (5) is provided in the form of an at least two-armed drive lever (6) of which one arm (8) can be coupled to the driving member (13) which causes the lever (6) to move about its axis and of which the second arm (9) which is directed towards the cutting tool (5) can be articulatingly connected to the arm (9), characterised in that the drive lever (6) is constructed as a gear part for amplified transmission of the driving movement force of the driving member (13) and in that the arm (9) of the drive lever (6) which can be articulatingly connected to the cutting tool (5) has a shorter length than the arm (8) associated with the driving member (13).

2. A silage block cutter according to claim 1, characterised in that the cutting tools (5) of different supporting frame members (2, 3) have a common driving means by which they can be coupled via the drive members (6) for drive transmission, the drive members (6) of cutting tools (5) of adjacently disposed supporting frame members (2, 3) are capable of being positively connected in the transition zone of the members (2, 3).

3. A silage block cutter according to claim 1 or 2, characterised in that substantially hemispherical joint sockets into which corresponding hemispherical arm ends of the drive levers (6) engage are constructed in the lateral and in the front cutting tools (5) as well as in parts (11, 15) which can be connected to a drive lever (6).

4. A silage block cutter according to one of claims 1 to 3, characterised in that the drive member (6) is subject to a substantially vertical effect of the associated drive means.

5. A silage block cutter according to one of claims 1 to 4, characterised in that a three-armed drive lever is associated at least with the front cutting tool (5).

6. A silage block cutter according to one of claims 1 to 5 with cutting tools (5) constructed as double cutters having cutter bars adapted for movement in relation to one another, characterised in that both cutter bars of one cutting tool (5) have oppositely pivotable drive members (6) adapted to be positively coupled to one another.

7. A silage block cutter according to claim 6, characterised in that the first cutter bar of a lateral cutting tool (5) of a three-armed drive lever associated with the drive member (13) and the second cutter bar of the lateral cutting tool (5) has a two-armed drive lever which can be articulatingly connected to the three-armed drive lever.

8. A silage block cutter according to claim 6 or 7 having a U-shaped supporting frame, characterised in that the two cutter bars of the front cutting tool (5) have in each case a drive member adapted to be coupled to the drive means (13) via a connecting part (15), one drive member being capable of being connected to the drive member of one cutter bar of a lateral supporting frame member while the other driving member can be connected to the driving member of a cutter bar of the oppositely disposed lateral supporting frame member.

9. A silage block cutter according to one of claims 1 to 8, characterised in that all cutter bars (5) can be driven by one common drive means (13) and in that the drive member (6) of the cutter bars (6) of the front supporting frame member (2) engages a connecting joint (15).

10. A silage block cutter according to one of the preceding claims, characterised in that a double acting working cylinder (13) is provided as the driving means.

11. A silage block cutter according to claim 10, characterised in that the working cylinder (13) is supported on a supporting frame member (2) and projects in the plane of the members and substantially at right-angles to the member (2).

12. A silage block cutter according to one of the preceding claims, characterised in that each supporting frame member (2, 3) is constructed as a substantially panel-like housing with an inner space for the enclosed accommodation of moving parts carried by it and from the under side of which the edges of the cutter bars protrude.

**Revendications**

1. Découpeuse de blocs d'ensilage comportant un cadre de support en U ou en L (1), monté déplaçable en hauteur sur un bâti et sur les ailes (2, 3) duquel sont fixés des outils de coupe (5) ayant la forme de couteaux rigides pouvant être animés d'un mouvement oscillant par un organe d'entraînement (13), étant entendu que, pour la transmission du mouvement d'entraînement d'un organe d'entraînement (13) à un outil de coupe latéral et/ou antérieur (5) est prévu un élément d'entraînement ayant la forme d'un levier coudé ou d'entraînement (6, 10), au moins à deux bras, monté à pivotement sur l'aile (2, 3) du cadre de support autour d'un axe orienté en substance perpendiculairement à la direction du mouvement de coupe de l'outil de coupe (5), le premier bras (8, 12) du levier pouvant être accouplé à l'organe d'entraînement (13) qui anime le levier (6, 10) d'un mouvement autour de son axe et son second bras (9), orienté vers l'outil de coupe (5), pouvant être articulé à celui-ci, le levier coudé ou d'entraînement (6, 10) étant conçu comme un élément de timonerie transmettant la force du mouvement d'entraînement de l'organe d'entraînement (13) avec un effet de multiplication et le bras (9) du levier coudé ou d'entraînement (6, 10) qui peut être articulé à l'outil de coupe (5) ayant une longueur inférieure à celle du bras (8, 12) associé à l'organe d'entraînement (13).

2. Découpeuse de blocs d'ensilage suivant la revendication 1, caractérisée en ce que les outils de coupe (5) de différentes ailes (2, 3) du cadre de support ont un organe d'entraînement commun auquel ils peuvent être accouplés à des fins d'entraînement par l'intermédiaire des éléments d'entraînement (6), les éléments d'entraînement (6) d'outils de coupe (5) d'ailes (2, 3) voisines du cadre de support pouvant être reliés à transfert de force dans le domaine de transition des ailes (2, 3).

3. Découpeuse de blocs d'ensilage suivant la revendication 1 ou 2, caractérisée en ce que, dans les outils de coupe (5) latéraux et l'outil de coupe (5) antérieur ainsi que dans des éléments (11, 15) pouvant être reliés par un levier d'entraînement (6) sont ménagées des cuvettes d'articulation approximativement hémisphériques dans lesquelles s'engagent des extrémités hémisphériques correspondantes des bras des leviers d'entraînement (6).

4. Découpeuse de blocs d'ensilage suivant l'une quelconque des revendications 1 à 3, caractérisée en ce que l'élément d'entraînement (6) est soumis à l'action en substance verticale de l'organe d'entraînement associé.

5. Découpeuse de blocs d'ensilage suivant l'une quelconque des revendications 1 à 4, caractérisée en ce qu'un levier d'entraînement à trois bras est associé au moins à l'outil de coupe antérieur (5).

6. Découpeuse de blocs d'ensilage suivant l'une quelconque des revendications 1 à 5, équipée d'outils de coupe (5) ayant la forme de couteaux doubles comportant des lames de couteau mobiles l'une par rapport à l'autre, caractérisée en ce que les deux lames de couteau d'un outil de coupe (5) comportent des éléments d'entraînement (6) pouvant pivoter en sens opposés et pouvant être accouplés à transfert de force l'un à l'autre.

7. Découpeuse de blocs d'ensilage suivant la revendication 6, caractérisée en ce que la première lame de couteau d'un outil de coupe latéral (5) comporte un levier d'entraînement à trois bras associé à l'organe d'entraînement (13) et la seconde lame de couteau d'un outil de coupe latéral (5) comporte un levier d'entraînement à deux bras pouvant être articulé au levier d'entraînement à trois bras.

8. Découpeuse de blocs d'ensilage suivant la revendication 6 ou 7 comportant un cadre de support en forme de U, caractérisée en ce que les deux lames de couteau de l'outil de coupe antérieur (5) comportent chacune un élément d'entraînement pouvant être accouplé par l'intermédiaire d'une pièce de liaison (15) à l'organe d'entraînement (13), le premier élément d'entraînement pouvant être relié à l'élément d'entraînement de la première lame de couteau d'une aile latérale du cadre de support et l'autre élément d'entraînement pouvant être relié à l'élément d'entraînement d'une lame de couteau de l'aile latérale opposée du cadre de support.

9. Découpeuse de blocs d'ensilage suivant l'une quelconque des revendications 1 à 8, caractérisée en ce que toutes les lames de couteau (5) peuvent être entraînées par un organe d'entraînement commun (13) qui est en prise avec une articulation de liaison (15) des éléments d'entraînement (6) des lames de couteau (5) de l'aile antérieure (2) du cadre de support.

10. Découpeuse de blocs d'ensilage suivant l'une quelconque des revendications précédentes, caractérisée en ce qu'un vérin à double effet (13) est prévu en tant qu'organe d'entraînement.

11. Découpeuse de blocs d'ensilage suivant la revendication 10, caractérisée en ce que le vérin (13) prend appui sur une aile (2) du cadre de support et, dans le plan de l'aile, il s'étend à peu près perpendiculairement à partir de celle-ci (2).

12. Découpeuse de blocs d'ensilage suivant l'une quelconque des revendications précédentes, caractérisée en ce que chaque aile (2, 3) du cadre de support a la forme d'un carter en substance plat présentant un espace intérieur destiné à recevoir, dans des conditions étanches, les pièces mobiles qu'il supporte et duquel les tranchants des lames de couteau font saillie, à son côté inférieur.

# Fig.1

EP 0 255 024 B1

Fig.2

EP 0 255 024 B1

*Fig.3*

EP 0 255 024 B1

*Fig. 4*

EP 0 255 024 B1

Fig.5